# EUROPÄISCHE PATENTSCHRIFT

(11) **EP 1 379 780 B1**
(45) Veröffentlichungstag und Bekanntmachung des Hinweises auf die Patenterteilung: **09.11.2005**
(21) Anmeldenummer: 02722216.5
(22) Anmeldetag: 14.03.2002
(51) Int. Cl.: F03D 9/00, H02J 3/38, F03D 7/02

(54) **VERFAHREN ZUM BETRIEB EINER WINDENERGIEANLAGE**
METHOD FOR OPERATING A WIND ENERGY PLANT
PROCEDE D'UTILISATION D'UNE INSTALLATION A ENERGIE EOLIENNE

(30) Priorität: 06.04.2001 DE 10117212
(43) Veröffentlichungstag der Anmeldung: 14.01.2004
(73) Patentinhaber: Dewind GmbH, 23569 Lübeck (DE)
(72) Erfinder: WILISCH, Wolf, 22147 Hamburg (DE); MÜLLER, Robert, 23564 Lübeck (DE)
(74) Vertreter: Kloiber, Thomas
(86) Internationale Anmeldenummer: PCT/EP2002/002825
(87) Internationale Veröffentlichungsnummer: WO 2002/081907

(56) Entgegenhaltungen:
- DE-A- 3 727 696
- DE-A- 19 844 258
- GB-A- 2 095 487
- US-A- 5 083 039
- SPEE R ET AL: "Adaptive control strategies for variable-speed doubly-fed wind power generation systems" INDUSTRY APPLICATIONS SOCIETY ANNUAL MEETING, 1994., CONFERENCE RECORD OF THE 1994 IEEE DENVER, CO, USA 2-6 OCT. 1994, NEW YORK, NY, USA,IEEE, 2. Oktober 1994 (1994-10-02), Seiten 545-552, XP010124064 ISBN: 0-7803-1993-1
- CADIRCI I ET AL: "DOUBLE-OUTPUT INDUCTION GENERATOR OPERATING AT SUBSYNCHRONOUS AND SUPERSYNCHRONOUS SPEEDS: STEADY-STATE PERFORMANCE OPTIMISATION AND WIND-ENERGY RECOVERY" IEE PROCEEDINGS B. ELECTRICAL POWER APPLICATIONS, INSTITUTION OF ELECTRICAL ENGINEERS. STEVENAGE, GB, Bd. 139, Nr. 5 PART B, 1. September 1992 (1992-09-01), Seiten 429-442, XP000320150

## Beschreibung

Die Erfindung betrifft ein Verfahren zum Betrieb einer Windenergieanlage mit einem Drehstromgenerator mit einem Gleichspannungszwischenkreis-Umrichter im Rotorkreis für einen drehzahlvariablen Generatorbetrieb.

Ein gattungsgemäßes Verfahren ist beispielsweise in der Schrift Adaptive control strategies for variable-speed doubly-fed wind power generation systems", INDUSTRY APPLICATIONS SOCIETY ANNUAL MEETING, 1994, CONFERENCE RECORD OF THE 1994 IEEE DENVER; CO, USA 2-6 OCT.. 1994, NEW YORK, NY, USA,IEEE, 2. Oktober 1994 (1994-10-02), Seiten 545-552, XP010124064 ISBN: 0-7803-1993-1 beschrieben. Dort ist die Anwendung einer adaptive Regelungsstrategie für doppeltgespeiste Maschinen auf Windenergieanlagen mit variabler Drehzahl offenbart. Dabei wird eine adaptive Strategie zur Nachverfolgung des Punktes maximaler Leistung (Maximum Power Point Tracking, MPPT) zusammen mit der Nachverfolgung des Verhältnisses der maximalen Geschwindigkeit der Rotorblattspitzen zur Windgeschwindigkeit (*tipspeed-ratio*) eingesetzt. Hierdurch konnte die Gesamtenergieabgabe erhöht werden.

Windenergieanlagen mit Propellerblättern mit verstellbarem Anstellwinkel können mit variabler Drehzahl betrieben werden. Eine typische Anlage besitzt einen doppeltgespeisten Drehstromgenerator, dessen Rotorkreis über einen Spannungszwischenkreis-Umrichter mit dem Stromnetz verbunden ist. Der Umrichter besteht beispielsweise aus zwei IGBT-Pulswechselrichtern, die über einen Gleichspannungzwischenkreis miteinander verbunden sind. Mittels einer feldorientierten Regelung des Umrichters werden frequenzvariable, dreiphasige, sinusförmige Rotorströme ausgesteuert, die einen oberschwingungsarmen Netzstrom im Stator induzieren.

Das Windungsverhältnis zwischen Stator und Rotor sowie der Spannungssteuerbereich des Generators bestimmen den nutzbaren Schlupfbereich des Generators, der bei bekannten Anlagen bei +/-35% Schlupf liegt.

Windenergieanlagen mit hoher Leistung, beispielsweise mit 2 MW, erzeugen auch bei geringem Wind noch ein beachtliches Drehmoment, das aber mit den bekannten Betriebsverfahren nicht zur wirtschaftlichen Energieerzeugung genutzt werden kann. Dies liegt daran, dass die Ausnutzung des untersynchronen Drehzahlbereichs beim üblichen Betrieb des Generators als doppeltgespeiste Asynchronmaschine auf eine untere Drehzahlgrenze stößt, bei der eine notwendige Vergrößerung der Umrichterspannung zu unwirtschaftlich hohen Eisenverlusten des Stators am Stromnetz führt. Die so erzeugbare elektrische Energie wird unterhalb einer Grenzdrehzahl kleiner als die vom Stator aus dem Netz aufgenommene Energie.

Aufgabe der vorliegenden Erfindung ist es, ein Verfahren zum Betrieb einer Windenergieanlage anzugeben, das die wirtschaftliche Erzeugung elektrischer Energie auch bei schwachem Wind ermöglicht.

Die Aufgabe wird erfindungsgemäß dadurch gelöst, dass der Drehstromgenerator bei normalen Windverhältnissen im Normalbetrieb als doppeltgespeiste Asynchronmaschine betrieben und bei geringem Wind außerhalb seines wirtschaftlichen untersynchronen Arbeitsbereiches durch Trennen seines Stators vom Stromnetz und Kurzschließen desselben über einen dreiphasigen Schlupfwiderstand zu einer einfachen Asynchronmaschine umgeschaltet und als solche betrieben wird.

Die Erfindung ermöglicht die wirtschaftliche Erzeugung elektrischer Energie mit Windenergieanlagen sowohl im üblichen Drehzahlbereich als auch bei geringeren Drehzahlen, die die bekannten Betriebsverfahren nicht abdecken. Dadurch können die erfindungsgemäß betriebenen Windenergieanlagen auch dann noch Energie erzeugen, wenn herkömmlich betriebene Anlagen bereits abgeschaltet werden und nutzlos herumstehen. Über große Zeiträume können daher mit einer erfindungsgemäß betriebenen Windenergieanlage im Mittel wesentlich größere Energiemengen erzeugt werden als mit herkömmlich betriebenen.

In bekannten Windenergieanlagen ist es üblich, dass ein Statorkabel zum Anschluss des Stators an das Stromnetz von dem am oberen Ende des Anlagenturms angeordneten Generator durch den Turm hindurch bis zu einem am Fuß des Turms angeordneten Schaltkasten verläuft, wo es mit dem Stromnetz verbunden wird. In einem solchen Schaltkasten oder in seiner Nähe werden zweckmäßigerweise auch ein Schalter zum Trennen des Stators vom Stromnetz und ein Schalter zum Kurzschließen des Stators über den dreiphasigen Schlupfwiderstand angeordnet. Bei einer solchen Anordnung kann das erfindungsgemäße Verfahren verbessert werden, indem ein innerhalb der Windenergieanlage vom Stator zu einem Netzanschluss führendes dreiphasiges Kabel als dreiphasiger Schlupfwiderstand verwendet wird. Durch diese Maßnahme kann der Aufwand für einen besonderen Schlupfwiderstand entfallen. Das ohnehin vorhandene Kabel übernimmt einfach die Rolle des Schlupfwiderstands.

In einer bevorzugten Ausführungsform des erfindungsgemäßen Verfahrens ist vorgesehen, dass der im Normalbetrieb als 4-Quadranten-Pulsumrichter dienende Gleichspannungszwischenkreis-Umrichter des Rotors zum Vollumrichter für den im Stator über den Schlupfwiderstand kurzgeschlossenen Drehstromgenerator gemacht wird.

Das Verfahren kann noch verbessert werden durch die Maßnahme, dass eine Steuervorrichtung zur Frequenz- und Spannungssteuerung zweier Pulswechselrichter mit Gleichspannungszwischenkreis vorgesehen ist, die von der feldorientierten Regelung der Rotorerregung der doppeltgespeisten Asynchronmaschine auf eine feldorientierte Regelung der einfachen Asynchronmaschine, deren Stator über den Schlupfwiderstand kurzgeschlossen ist, umgeschaltet wird.

Eine Abwandlung des erfindungsgemäßen Betriebsverfahren für andere Betriebszustände sieht vor, dass der Drehstromgenerator für die Inbetriebsetzung und/oder beim Aufbau der Windenergieanlage als Asynchronmotor betrieben wird, wobei sein Stator vom Stromnetz getrennt und über einen dreiphasigen Schlupfwiderstand kurzgeschlossen wird.

Die Erfindung umfasst auch eine Windenergieanlage, die zur Durchführung des erfindungsgemäßen Betriebsverfahren geeignet und entsprechend ausgestaltet ist.

Weitere Vorteile und Einzelheiten der Erfindung ergeben sich aus der nachfolgenden Beschreibung eines Ausführungsbeispiels anhand der Zeichnungen. Darin zeigen:
- Figur 1:: eine schematische Darstellung einer für die Durchführung des erfindungsgemäßen Verfahrens geeignete Windenergieanlage;
- Figur 2:: ein Diagramm mit einer normierten Darstellung der erzeugten Leistung in Abhängigkeit von der Drehzahl.

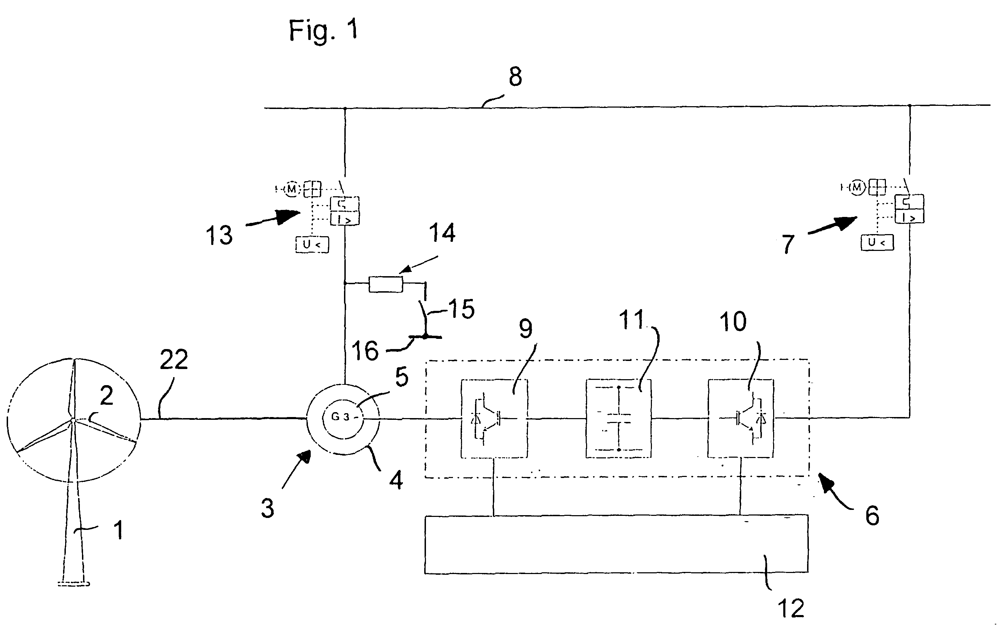

In Figur 1 erkennt man einen Turm 1 einer Windenergieanlage mit einem aus drei Propellerblättern bestehenden Propeller 2, bei dem die Anstellwinkel der Propellerblätter stufenlos verstellbar sind, um bei unterschiedlichsten Windverhältnissen ein für die Energieerzeugung ausreichendes Drehmoment über einen großen Drehzahlbereich zu gewährleisten.

Ein Drehstromgenerator 3 ist über eine mechanische Verbindung 22 mit dem Propeller 2 verbunden und wird von diesem angetrieben. Der Drehstromgenerator 3 besitzt einen Stator 4 und einen Rotor 5.

Der Stator 4 des Drehstromgenerators 3 kann entweder über einen ersten Schalter 13 mit dem Stromnetz 8 oder alternativ über einen dreiphasigen Schlupfwiderstand 14 und einen zweiten Schalter 15 zu einer kurzgeschlossenen Wicklung elektrisch verbunden werden. Im vorliegenden Schaltbild ist dieser Ständerkurzschluss mit dem Bezugszeichen 16 versehen.

Der Rotor 5 ist elektrisch mit einem Umrichter 6 verbunden, der seinerseits über einen dritten Schalter 7 mit dem Stromnetz 8 verbunden oder von diesem getrennt werden kann.

Der Umrichter 6 besteht aus zwei Pulswechselrichtern 9, 10, die über einen Gleichspannungszwischenkreis 11 elektrisch miteinander verbunden sind. Verschiedene Betriebszustände des Umrichters 6 werden mittels einer Steuervorrichtung 12 für die Frequenz- und Spannungssteuerung der beiden Pulswechselrichter 9, 10 hergestellt.

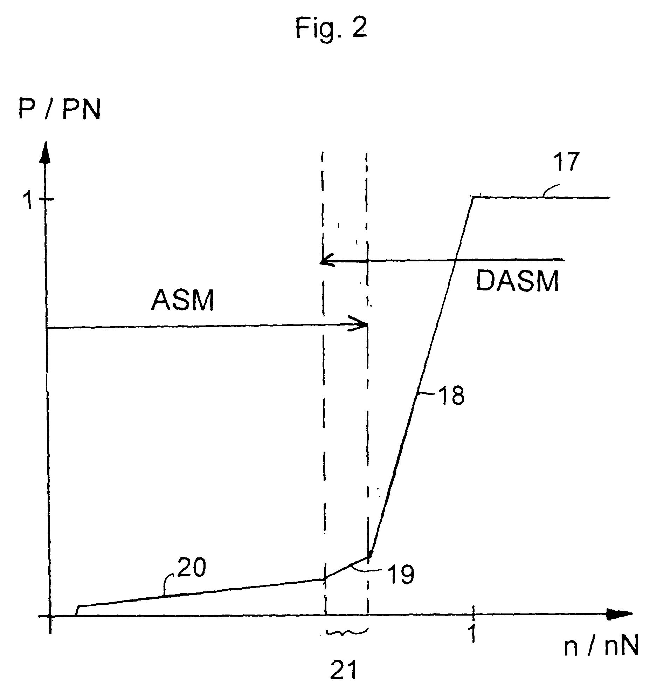

Im Diagramm der Figur 2 ist auf der Abszisse eine Drehzahl n aufgetragen, die auf eine Nenndrehzahl nN normiert ist. Es spielt keine Rolle, ob es sich dabei um die Drehzahl des Propellers 2 oder die des Rotors 5 handelt, denn diese beiden Drehzahlen unterscheiden sich höchstens um einen konstanten Faktor, der durch ein ggf. zwischengeschaltetes starres Übersetzungsgetriebe bedingt sein kann. Der konstante Faktor wird aber durch die Normierung des Maßstabs der Abszisse auf die Nenndrehzahl eliminiert.

Auf der Ordinate des Diagramms von Figur 2 ist eine auf eine Nennleistung PN normierte elektrische Leistung P des Drehstromgenerators 3 aufgetragen, die dieser an das Stromnetz 8 abgeben kann. Die Leistungskurve des Diagramms besteht aus vier gut unterscheidbaren Abschnitten 17, 18, 19, 20.

Bei genügend starkem Wind wird die Windenergieanlage im Abschnitt 17 betrieben. Dabei wird die für die Erzeugung der Nennleistung PN erforderliche Drehzahl nN überschritten. Durch Verstellen des Anstellwinkels der Propellerblätter 2 wird die tatsächliche Drehzahl n der Windstärke angepasst und dabei durch entsprechende Steuerung des Umrichters 6 mittels der Steuervorrichtung 12 die an das Stromnetz 8 abgegebene Leistung P konstant auf der Nennleistung PN gehalten. Der Drehstromgenerator 3 wird in diesem Bereich im Normalbetrieb als doppeltgespeiste Asynchronmaschine, der Umrichter 6 mittels der Steuervorrichtung 12 als 4-Quadranten-Pulsumrichter betrieben. Der Normalbetriebszustand ist in der Figur 2 mit DASM bezeichnet.

Bei schwächer werdendem Wind kann die für die Erzeugung der Nennleistung PN erforderliche Drehzahl nN nicht mehr gehalten werden. Im Bereich 18 der Leistungskurve fällt daher die tatsächlich abgegebene Leistung P unter die Nennleistung PN ab und zwar in etwa proportional zur abfallenden Drehzahl n, bis eine minimale Drehzahl erreicht ist, mit der die Windenergieanlage im Normalbetriebszustand DASM noch wirtschaftlich betrieben werden kann. Bei noch schwächeren Windstärken müsste eine Windenergieanlage ohne das erfindungsgemäße Betriebsverfahren stillgesetzt werden.

Die Erfindung ermöglicht aber den Weiterbetrieb der Windenergieanlage bei sehr schwachem Wind, durch Umschalten in einen Betriebszustand ASM, in dem der Drehstromgenerator 3 als Asynchronmaschine und der Umrichter 6 als Vollumrichter betrieben wird. Dabei wird der Stator 4 durch Öffnen des ersten Schalters 13 vom Stromnetz 8 getrennt und über den Schlupfwiderstand 14 durch Schließen des zweiten Schalters 15 kurzgeschlossen. Somit wird verhindert, dass die Eisenverluste des Stators 4 am Stromnetz 8 die gleichzeitig vom Generator erzeugte elektrische Energie überwiegen.

Wie man im Diagramm von Figur 2 erkennen kann, fällt der Abschnitt 20 der Leistungskurve wiederum in etwa proportional mit der Drehzahl ab, allerdings mit einer flacheren Steigung als im Abschnitt 18. Dieser Betriebszustand ASM ermöglicht die wirtschaftliche Energieeinspeisung bei geschlossenem dritten Schalter 7 in das Stromnetz 8 auch noch bei sehr geringen Drehzahlen n, die bei sehr geringen Windstärken erreicht werden. Im Abschnitt 20 der Leistungskurve kann die erfindungsgemäß betriebene Windenergieanlage somit zusätzliche Energie erzeugen, die von einer auf herkömmliche Art betriebene Anlage nicht erzeugt werden kann.

Diese Energiedifferenz, die bei der herkömmlichen Windenergieanlage verloren wäre, kann unter Umständen enorm groß werden. Die Höhe der Differenz hängt im-wesentlichen von den Windverhältnissen am Standort der Anlage ab. Je größer die Zeiträume mit schwachen Windverhältnissen sind, desto größer wird die zusätzlich gewonnene Energie.

Die Drehzahlbereiche der beiden Betriebszustände ASM und DASM überschneiden sich in dem in Figur 2 durch Strichelung angedeuteten Umschaltbereich 21. Der Umschaltpunkt kann dabei je nach dem verwendeten Steueralgorithmus mal bei etwas höheren oder etwas niedrigeren Drehzahlen n liegen. Entsprechend unterschiedlich kann daher auch die zugehörige elektrische Leistung P ausfallen. Der dritte Abschnitt 19 der Leistungskurve stellt daher nicht den tatsächlichen Verlauf dar, sondern ist lediglich als schematische Darstellung des Übergangs zu verstehen.

### Bezugszeichenliste

- 1: Turm
- 2: Propeller
- 3: Drehstromgenerator
- 4: Stator
- 5: Rotor
- 6: Umrichter
- 7: dritter Schalter
- 8: Stromnetz
- 9: Pulswechselrichter
- 10: Pulswechselrichter
- 11: Gleichspannungszwischenkreis
- 12: Steuervorrichtung
- 13: erster Schalter
- 14: Schlupfwiderstand
- 15: zweiter Schalter
- 16: Ständerkurzschluss
- 17: erster Abschnitt
- 18: zweiter Abschnitt
- 19: dritter Abschnitt
- 20: vierter Abschnitt
- 21: Umschaltbereich
- 22: mechanische Verbindung
- P: elektrische Leistung
- PN: Nennleistung
- n: Drehzahl
- nN: Nenndrehzahl
- ASM: Betrieb als Asynchronmaschine / Vollumrichterbetrieb
- DASM: Betrieb als doppeltgespeiste Asynchronmaschine / Normalbetrieb

## Patentansprüche

1. Verfahren zum Betrieb einer Windenergieanlage mit einem Drehstromgenerator (3) mit einem Gleichspannungszwischenkreis-Umrichter (6) im Rotorkreis für einen drehzahlvariablen Generatorbetrieb, **dadurch gekennzeichnet, dass** der Drehstromgenerator (3) bei normalen Windverhältnissen im Normalbetrieb als doppeltgespeiste Asynchronmaschine (DASM) betrieben und bei geringem Wind außerhalb seines wirtschaftlichen untersynchronen Arbeitsbereiches durch Trennen seines Stators (4) vom Stromnetz (8) und Kurzschließen desselben über einen dreiphasigen Schlupfwiderstand (14) zu einer einfachen Asynchronmaschine (ASM) umgeschaltet und als solche betrieben wird.

2. Verfahren nach Anspruch 1, **dadurch gekennzeichnet, dass** ein innerhalb der Windenergieanlage vom Stator (4) zu einem Netzanschluss führendes dreiphasiges Kabel als dreiphasiger Schlupfwiderstand (14) verwendet wird.

3. Verfahren nach Anspruch 1 oder 2, **dadurch gekennzeichnet, dass** der im Normalbetrieb (DASM) als 4-Quadranten-Pulsumrichter dienende Gleichspannungszwischenkreis-Umrichter (6) des Rotors (5) zum Vollumrichter für den im Stator (4) über den Schlupfwiderstand (14) kurzgeschlossenen Drehstromgenerator (3) gemacht wird.

4. Verfahren nach Anspruch 3, **dadurch gekennzeichnet, dass** eine Steuervorrichtung (12) zur Frequenz- und Spannungssteuerung zweier Pulswechselrichter (9, 10) mit Gleichspannungszwischenkreis (11) vorgesehen ist, die von der feldorientierten Regelung der Rotorerregung der doppeltgespeisten Asynchronmaschine (DASM) auf eine feldorientierte Regelung der einfachen Asynchronmaschine (ASM), deren Stator (4) über den Schlupfwiderstand (14) kurzgeschlossen ist, umgeschaltet wird.

5. Verfahren nach Anspruch 1, **dadurch gekennzeichnet, dass** der Drehstromgenerator (3) für die Inbetriebsetzung und/oder beim Aufbau der Windenergieanlage als Asynchronmotor betrieben wird, wobei sein Stator (4) vom Stromnetz (8) getrennt und über einen dreiphasigen Schlupfwiderstand (14) kurzgeschlossen wird.

6. Windenergieanlage mit einem Drehstromgenerator (3) mit einem Gleichspannungszwischenkreis-Umrichter (6) im Rotorkreis für einen drehzahlvariablen Generatorbetrieb, **dadurch** g**ekennzeichnet, dass** der Stator (4) des Drehstromgenerators (3) in einem ersten Betriebszustand über einen ersten Schalter (13) mit dem Stromnetz (8) verbindbar und in einem zweiten Betriebszustand über einen zweiten Schalter (15) und einen dreiphasigen Schlupfwiderstand (14) kurzschließbar ist, so dass der Drehstromgenerator (3) bei normalen Windverhältnissen im Normalbetrieb als doppeltgespeiste Asynchronmaschine (DASM) betreibbar und bei geringem Wind außerhalb seines untersynchronen Arbeitsbereiches durch Trennen seines Stators (4) vom Stromnetz (8) und Kurzschließen desselben über einen dreiphasigen Schlupfwiderstand (14) zu einer einfachen Asynchronmaschine (ASM) umschaltbar und als solche betreibbar ist.

7. Windenergieanlage nach Anspruch 6, **dadurch gekennzeichnet, dass** eine Steuervorrichtung zur Frequenz- und Spannungssteuerung zweier Pulswechselrichter (9, 10) mit Gleichspannungszwischenkreis (11) vorgesehen ist, die von der feldorientierten Regelung der Rotorerregung der doppelgespeisten Asynchronmaschine (DASM) auf eine feldorientierte Regelung der einfachen Asynchronmaschine (ASM), deren Stator (4) über den Schlupfwiderstand (14) kurzgeschlossen ist, umschaltbar ist, so dass der im Normalbetrieb als 4-Quadranten-Pulsumrichter dienende Gleichspannungszwischenkreis-Umrichter (6) des Rotors (5) als Vollumrichter für den im Stator (4) über den Schlupfwiderstand (14) kurzgeschlossenen Drehstromgenerator (3) betreibbar ist.

8. Windenergieanlage nach Anspruch 6 oder 7, **dadurch gekennzeichnet, dass** der dreiphasige Schlupfwiderstand (14) ein innerhalb der Windenergieanlage vom Stator (4) zu einem Netzanschluss am Fuß des Turms (1) führendes dreiphasiges Kabel ist.

## Claims

1. A method for operating a wind energy plant with a three-phase current generator (3) with a constant voltage d.c. link converter (6) in the rotor circuit for generator operation variable in rotational speed, **characterised in that** the three-phase current generator (3) with normal wind conditions in normal operation is operated as a double-fed asynchronous machine (DASM), and with a slight wind outside its economical subsynchronous operating region, by way of separating its stator (4) form the electricity mains (8) and short-circuiting this via a three-phase slip resistance (14) is switched over to a simple asynchronous machine (ASM) and is operated as such.

2. A method according to claim 1, **characterised in that** a three-phase cable leading within the wind energy plant from the stator (4) to a mains connection is used as a three-phase slip resistance (14).

3. A method according to claim 1 or 2, **characterised in that** the constant voltage d.c. link converter (6) of the rotor (5) which serves as a 4-quadrant pulse converter in normal operation (DASM) is made into a full converter for the three-phase current generator (3) short-circuited in the stator (4) via the slip resistance (14).

4. A method according to claim 3, **characterised in that** a control device (12) for the control of the frequency and voltage of two indirect a.c converters (9, 10) is provided with a constant voltage d.c. link (11) which is switched over from the field-orientated [closed-loop] control of the rotor excitation of the double-fed asynchronous machine (DASM) to a field orientated [closed-loop] control of the simple asynchronous machine (ASM) whose stator (4) is short-circuited via the slip resistance (14).

5. A method according to claim 1, **characterised in that** the three-phase current generator (3) for starting operation and/or on construction of the wind energy plant is operated as an asynchronous motor, wherein its stator (4) is separated from the electricity mains (8) and is short-circuited via a three-phase slip resistance (14).

6. A wind energy plant with a three-phase current generator (3) with a constant voltage d.c. link converter (6) in the rotor circuit for generator operation variable in rotational speed, **characterised in that** the stator (4) of the three-phase current generator (3) in a first operating condition is connectable to the electricity mains (8) via a first switch (13), and in a second operating condition may be short-circuited via a second switch (15) and a three-phase slip resistance (14), so that the three-phase current generator (3) with normal wind conditions in normal operations may be is operated as a double-fed asynchronous machine (DASM), and with a slight wind outside its subsynchronous working region, by way of separating its stator (4) from the electricity mains (8) and short circuiting this via a three-phase slip resistance (14), may be switched over to a simple asynchronous machine (ASM) and may be operated as such.

7. A wind energy plant according to claim 6, **characterised in that** a control device for the control of the frequency and voltage of two indirect a.c converters (9, 10) with a constant voltage d.c. link (11) is provided, which may be switched over from the field-orientated [closed-loop] control of the rotor excitation of the double-fed asynchronous machine (DASM) to a field-orientated [closed-loop] control of the simple asynchronous machine (ASM) whose stator (4) is short-circuited via the slip resistance (14), so that the constant voltage d.c. link converter (6) of the rotor (5) serving as a 4-quadrant pulse converter in normal operation may be operated as a full converter for the three-phase current generator (3) short-circuited in the stator (4) via the slip resistance (14).

8. A wind energy plant according to claim 6 or 7, **characterised in that** the three-phase slip resistance (14) is a three-phase cable leading within the wind energy plant from the stator (4) to a mains connection at the foot of the tower (1).

## Revendications

1. Procédé pour faire fonctionner une installation de production d'énergie éolienne comportant un générateur à courant triphasé (3), comportant
un convertisseur (6) à circuit intermédiaire à tension continue situé dans le circuit du rotor pour un fonctionnement en générateur à vitesse de rotation variable,
**caractérisé en ce qu'**on fait fonctionner le générateur de courant triphasé (3), dans le cas de conditions normales de vent, dans le fonctionnement normal en tant que machine asynchrone à double alimentation (DASM) et que dans le cas d'un faible vent, en dehors de sa plage économique de travail sous-synchrone, le générateur est commuté, sous l'effet de la séparation de son stator (4) vis-à-vis du réseau d'alimentation (8) et du court-circuitage de ce dernier par l'intermédiaire d'une résistance de glissement triphasée (14), en une machine asynchrone (ASM) simple et qu'on le fait fonctionner en tant que machine asynchrone de ce type.

2. Procédé selon la revendication 1, **caractérisé en ce qu'**on utilise un câble triphasé, qui relie le stator (4) à une borne du réseau, à l'intérieur de l'installation de production d'énergie éolienne, en tant que résistance de glissement triphasée (14).

3. Procédé selon la revendication 1 ou 2, **caractérisé en ce que** le convertisseur (6) à circuit intermédiaire à tension continue du rotor (5), utilisé dans le fonctionnement normal (DASM) en tant que convertisseur d'impulsions sur quatre quadrants, est converti de manière à constituer le mutateur complet pour le générateur de courant triphasé (3) court-circuité dans le stator (4) par l'intermédiaire de la résistance de glissement (14).

4. Procédé selon la revendication 3, **caractérisé en ce qu'**il est prévu un dispositif de commande (12) pour la commande de la fréquence et de la tension de deux onduleurs à impulsions (9,10), qui est équipé d'un circuit intermédiaire à tension continue (11), qui est commuté depuis une régulation, axée sur le champ, de l'excitation du rotor de la machine asynchrone à double alimentation. (DASM) sur une régulation, axée sur le champ, de la machine asynchrone simple (ASM), dont le stator (4) est court-circuité par l'intermédiaire de la résistance de glissement (14).

5. Procédé selon la revendication 1, **caractérisé en ce qu'**on fait fonctionner le générateur de courant triphasé (3) pour la mise en fonctionnement et/ou lors du montage de l'installation de production d'énergie éolienne en tant que générateur asynchrone, son stator (4) étant séparé du réseau d'alimentation en courant (8) et étant court-circuité par l'intermédiaire d'une résistance de glissement triphasée (14).

6. Installation de production d'énergie éolienne comportant un générateur de courant triphasé (3) comportant un commutateur (6) à circuit intermédiaire à tension continue dans le circuit du rotor fonctionnant en générateur à vitesse de rotation variable, **caractérisée en ce que** le rotor (14) du générateur de courant triphasé (3) peut être relié, dans un premier état de fonctionnement, par l'intermédiaire d'un premier interrupteur (13), au réseau d'alimentation (8) et peut être court-circuité, dans un second état de fonctionnement, au moyen d'un second interrupteur (15) et d'une résistance de glissement triphasée (14), de sorte qu'on peut faire fonctionner le générateur de courant triphasé (3)dans des conditions normales de vent, lors du fonctionnement normal, en tant que machine asynchrone à double alimentation(DASM), et, dans le cas d'un faible vent, en dehors de la plage de travail sous-synchrone, on peut le convertir par séparation de son stator (4) vis-à-vis du réseau d'alimentation (8) et par court-circuitage de ce dernier, par l'intermédiaire d'une résistance de glissement triphasée (3), en une machine asynchrone simple (ASM) et le faire fonctionner en tant que machine asynchrone de ce type.

7. Installation de production d'énergie éolienne selon la revendication 8, **caractérisée en ce qu'**un dispositif de commande est prévu pour la commande de fréquence et de tension de deux ondulateurs à impulsions (9,10) comportant un circuit intermédiaire à tension continue (11), qui peut être commuté depuis la régulation, axée sur le champ, de l'excitation du rotor de la machine asynchrone à double alimentation (DASM) sur une régulation, axée sur le champ, de la machine asynchrone simple (ASM), dont le stator est court-circuité par l'intermédiaire de la résistance de glissement (14), de sorte que le convertisseur (6) à circuit intermédiaire à tension continue du rotor (5), utilisé dans le fonctionnement normal sous la forme d'un commutateur à impulsions à quatre quadrants, peut fonctionner en tant que mutateur complet pour le générateur de courant triphasé (3) court-circuité dans le stator (4) par l'intermédiaire de la résistance de glissement (14).

8. Installation de production d'énergie éolienne selon la revendication 6 ou 7, **caractérisée en ce que** la résistance de glissement triphasée (14) est un câble triphasé, qui s'étend à l'intérieur de l'installation de production d'énergie éolienne depuis le stator (4) jusqu'à une borne du réseau au pied d'un mât (1).
